# EUROPÄISCHE PATENTSCHRIFT

(11) **EP 1 055 915 B1**
(45) Veröffentlichungstag und Bekanntmachung des Hinweises auf die Patenterteilung: **28.05.2003**
(21) Anmeldenummer: 00106770.1
(22) Anmeldetag: 30.03.2000
(51) Int. Cl.: G01D 11/24, G01D 5/347

(54) **Encoder mit zusammensteckbarem Gehäuse**
Encoder having an interlocking housing
Codeur avec un boîtier assemblable

(30) Priorität: 25.05.1999 DE 19923900
(43) Veröffentlichungstag der Anmeldung: 29.11.2000
(73) Patentinhaber: PWB-Ruhlatec Industrieprodukte GmbH, 99846 Seebach (DE)
(72) Erfinder: Braun, Paul-Wilhelm, 53842 Troisdorf (DE); Hannemann, Jens, 99817 Eisenach (DE)
(74) Vertreter: Müller-Wolff, Thomas, Dipl.-Ing.

(56) Entgegenhaltungen:
- EP-A- 0 557 564
- DE-A- 19 641 929
- US-A- 5 057 684
- US-A- 5 708 496

## Beschreibung

Die Erfindung betrifft einen Encoder mit zusammensteckbarem Gehäuse zum stirnseitigen Anflanschen an einen Motor (1), der zumindest an einer Flanschebene eine in das Gehäuse hineinragende Motorwelle (2) aufweist,
wobei das Gehäuse aus einer Grundplatte (4) mit Gehäuseinnenteil (4a) und einem Gehäuseoberteil (11) besteht, die für den Zusammenbau ineinander steckbar sind und wobei auf dem Gehäuseinnenteil (4a) Bajonettsegmente (12a) angeordnet sind,
die in entsprechende Aussparungen (12b) des Gehäuseoberteils eingreifen,
wobei ferner an dem Bajonettsegment (12a) Führungsflächen (5a) ausgebildet sind, die mit entsprechenden Gegenflächen (5b) am Gehäuseoberteil eine Gleitführung bilden und die beim Einstecken durch Drehung in Umfangsrichtung eine Trennung des Gehäuseoberteils (11) von der Grundplatte (4) bewirken
und wobei in einer Dachfläche des Gehäuseoberteils konzentrisch zur Motorwelle eine Anpreßfläche (16) für die Justierung einer Taktscheibe (10) auf der Motorwelle (2) ausgebildet ist.

Ein Encoder der eingangs genannten Art ist aus der De 196 41 926 A1 (RUHLATEC Industrieprodukte GmbH) bekannt. Der dort beschriebene Taktscheibenhalter wird durch einen Sicherungsring 14 im vormontierten Zustand in der Gehäuseeinheit gehalten und dadurch gegen ein unbeabsichtigtes Herausfallen aus dem Gehäuse gesichert. Dabei hat der Sicherungsring 14 ausreichend Spiel für eine Zentrierung der Taktscheibe auf der Motorwelle bei dem Zusammenstecken der Gehäuseober- und Unterteile.

Bei größerem Wellendurchmesser (>3mm) wird die Montage durch immer größer werdende Aufdrückkräfte sehr erschwert. Es ist eine sehr hohe Oberflächengüte von Motorwelle und Taktscheibennabe erforderlich, damit bei sehr engen Paßtolleranzen keine Verklemmungen auftreten können. Ein weiteres Problem besteht darin, dass nach der vollzogenen Montage eine sogenannte "Freischaltung" der Taktscheibe erfolgen muss. Dieses bedeutet, dass das Gehäuse nur durch Verdrehung der Bajonettflächen auf Abstand zur Taktscheibe gebracht wird und dann die Taktscheibe frei auf der Motorwelle gelagert ist. Auch hier kann es mit dem Sicherungsring Probleme geben.

Aus US-A-5708496 ist ein Encoder mit einem zusammensteckbaren Gehäuse zum stirnseitigen Anflanschen an einen Motor bekannt. Das Gehäuse umfaßt ein mit Schrägflächen ausgerüstete Grundplatte für den Zusammenbau mit einer einsteckbaren Hülse. Eine Taktscheibe wird mittels der Hülse auf der Motorwelle befestigt, wobei eine von außen in die Grundplatte einschiebbare Gabel zur axialen Positionierung der Hülse verwendet wird. Auch die Gabel ist mit Schrägflächen ausgerüstet und besitzt darüber hinaus weitere Aussparungen und Ausformungen zur Verankerung und Positionierung in Linearführungen des Encodergehäuses.

Gemäß EP-A-0557564 wird eine Montagevorrichtung für eine Winkelmesseinrichtung beschrieben, die mit Anschlagflächen versehen ist und die mit entsprechen ausgebildeten Aufnahmeöffnungen an einem Stator einer Antriebseinheit befestigt ist. Der axiale und radiale Abstand zwischen einer Teilscheibe und einer Abtasteinheit wird durch korrespondierende Öffnungen im Starttor und den Anschlagflächen der Montagevorrichtung eingestellt. Schrägflächen zur Justierung oder Positionierung der Teilscheibe, die durch Verdrehung wie ein Bajonettverschluß wirken, sind hier nicht dargestellt.

Aufgabe der vorliegenden Erfindung ist es daher, bei einem Encoder der eingangs genannten Art die Sicherung der Taktscheibe vor dem Zusammenbau und die Freischaltung nach dem Zusammenbau derart zu ermöglichen, daß einerseits eine zentrische Position in bezug auf die Motorwelle auch unter erschwerten Montage- und Transportbedingungen eingehalten wird und andererseits eine sichere Freischaltung nach dem Zusammenstecken des Gehäuseoberteils auf die mit der Motorwelle verbundenen Grundplatte erfolgen kann.

Diese Aufgabe wird erfindungsgemäß durch die in den Schutzansprüchen angegebenen Merkmale gelöst. Es hat sich gezeigt, daß bei Verwendung einer Gabel mit unterschiedlichen ZinkenÖffnungsweiten eine sichere Zentrierung und Freischaltung ermöglicht wird.

Im folgenden wird die Erfindung anhand mehrerer Ausführungsbeispiele näher erläutert.

Es zeigen:
- Figur 1: Längs- und Querschnitt eines erfindungsgemäßen Encoders vor dem Zusammenbau,
- Figur 2: Längs- und Querschnitt eines erfindungsgemäßen Encoders nach dem Zusammenbau,
- Figuren 3 - 6: Montageablauf beim Zusammenstecken des Gehäuseoberteils auf das am Motor befestigte Gehäuseunterteil.

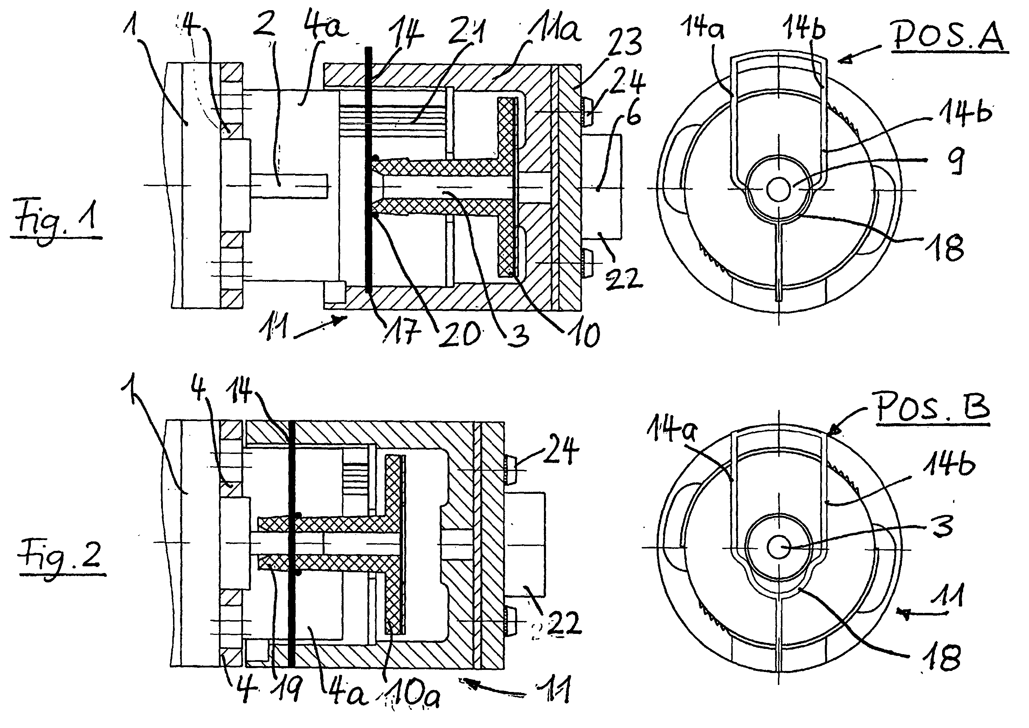

Im Längsschnitt nach Figur 1 ist der Motor mit 1, die Motorwelle mit 2, die Grundplatte mit 4 und das Gehäuseinnenteil mit 4a bezeichnet. Über das Gehäuseinnenteil 4a soll ein Gehäuseoberteil 11 geschoben und mit der Grundplatte fest verbunden werden. Das im vormontierten Zustand dargestellte Gehäuseoberteil besteht aus einem Rohrabschnitt 11a und einem Bodenabschnitt 11b, der auf der Innenseite eine Anpreßfläche 16 für eine Taktscheibe 10 aufweist. Die Taktscheibenachse 6 ist identisch mit der Zylinderachse des Gehäuses 11, sofern die Taktscheibe 10 sich im zentrierten Zustand befindet.

Der zentrierte Zustand wird dadurch erreicht, daß an der Taktscheibe 10 ein Führungsschaft 9 ausgebildet ist, dessen freies Ende von einer Gabel 14 gehalten wird. Die Gabelenden 14a, 14b und 14c sind in entsprechenden Führungen 15, 17 des Gehäuseoberteils 11 geführt. Dadurch ist ein Verrutschen der Taktscheibe 10 im vormontierten Zustand nahezu ausgeschlossen.

Zur Verbesserung der Zentrierwirkung und Fixierwirkung kann am Ende des Führungsschaftes 9 ein Außenkonus 19 ausgebildet sein, der sich zur Flanschebene des Motors 1 hin verjüngt. An der engsten Stelle ist ein Ring 20 auf der Konusoberfläche angeordnet, der eine zusätzliche Anschlagfläche für die Gabel 14 bietet.

An dem Längsquerschnitt gemäß Figur 1 ist ferner eine Rasterfläche 21 zu erkennen, die mit entsprechend ausgebildeten Gegenrasterungen (nicht dargestellt) am Innengehäuse 4a in Eingriff gebracht werden kann. Man erkennt ferner einen Steckverbinder 22 für den elektrischen Anschluß des Encoders und eine Abdeckplatte 23 des Gehäuseoberteils 11 mit Verschraubungen 24.

In Figur 2 ist der erfindungsgemäße Encoder nach dem Zusammenstecken dargestellt. Man erkennt im Längsschnitt die Taktscheibe 10 nach der Freischaltung, wobei sie nur auf der Motorwelle "fliegend" gelagert und somit frei beweglich im Gehäuseoberteil 11 drehbar ist. Die Gabel 14 schließt nach dem Eindrücken in Pfeilrichtung bündig mit der Gehäuseoberfläche ab, wodurch die Gefahr einer Verschmutzung- oder Beschädigung der Gabel 14 verhindert wird.

Der Ring 20 ist nach dem Eindrücken der Motorwelle 2 in die Bohrung 3 des Führungsschaftes 9 auf dem Außenkonus 19 nach außen in Richtung Taktscheibe 10 verrutscht. Als Material für den Ring 20 wird vorzugsweise ein elastischer Kunststoff, Gummi o. dgl. gewählt.

Aus der Querschnittsdarstellung gemäß Figur 2 ist erkennbar, daß die Gabel 14 nach dem Eindrücken in die Gehäuseführung 15, 17 den Führungsschaft 9 vollständig freigibt. Hierzu wird die in Figur 1 den Führungsschaft halbkreisförmig umgreifende Klammer 18 in eine von der Bohrfläche des Führungsschaftes 9 entfernte Position gebracht, so daß ausreichend Spiel für eine freie Lagerung der Taktscheibe 10 vorhanden ist.

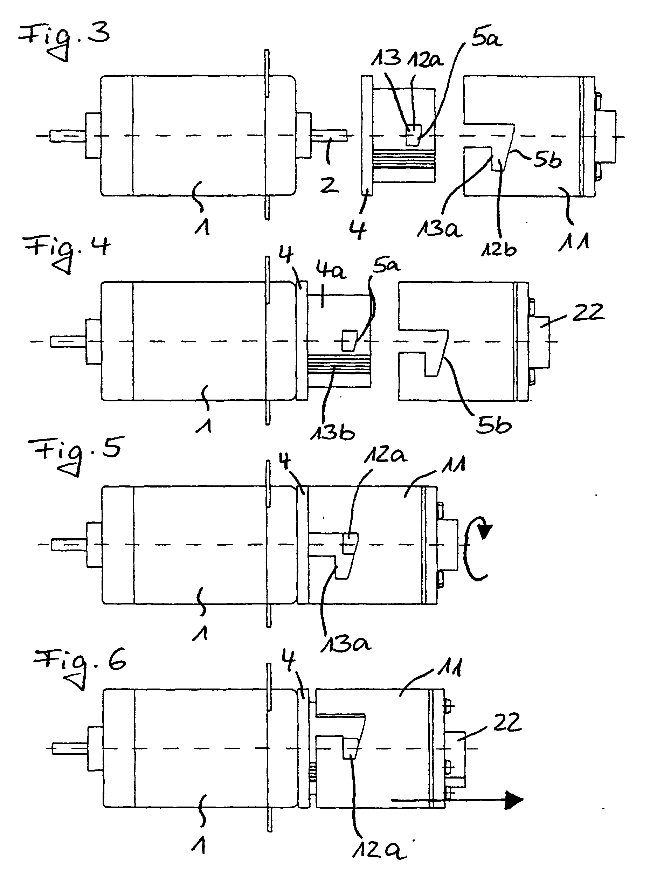

In der Bildfolge ab Figur 3 ist der Zusammenbau des einsteckbaren Encoders im Einzelnen dargestellt. Dabei wird der Motor 1 mit der Motorwelle 2 zunächst mit dem Gehäuseunterteil 4a verbunden, wobei die Flansch- oder Grundplatte 4 in üblicher Weise motorseitig fest verschraubt wird. Auf der Gehäuseinnenseite ist auch eine Rasterung 13b zu erkennen, die mit der eingangs erläuterten Rasterung am Gehäuseoberteil 11 in Kontakt gebracht wird. Dies erfolgt beim Aufschieben des Gehäuseoberteils und dem nachfolgenden Verdrehen in Pfeilrichtung gemäß Figur 5. Beim Verdrehen gleitet die Führungsfläche 5a des Bajonettsegmentes 12a auf der Gegenfläche 5b der Aussparung 12b, wodurch eine Verschiebung des Gehäuseoberteils 11 in Pfeilrichtung gemäß Figur 6 eintritt. Damit wird eine Freischaltung der Taktscheibe 10 bewirkt.

## Patentansprüche

1. Encoder mit zusammensteckbarem Gehäuse zum stirnseitigen Anflanschen an einen Motor (1), der zumindest an einer Flanschebene eine in das Gehäuse hineinragende Motorwelle (2) aufweist,
wobei das Gehäuse aus einer Grundplatte (4) mit Gehäuseinnenteil (4a) und einem Gehäuseoberteil (11) besteht, die für den Zusammenbau ineinander steckbar sind und wobei auf dem Gehäuseinnenteil (4a) Bajonettsegmente (12a) angeordnet sind,
die in entsprechende Aussparungen (12b) des Gehäuseoberteils eingreifen,
wobei ferner an dem Bajonettsegment (12a) Führungsflächen (5a) ausgebildet sind, die mit entsprechenden Gegenflächen (5b) am Gehäuseoberteil eine Gleitführung bilden und die beim Einstecken durch Drehung in Umfangsrichtung eine Trennung des Gehäuseoberteils (11) von der Grundplatte (4) bewirken,
wobei in einer Dachfläche des Gehäuseoberteils konzentrisch zur Motorwelle eine Anpreßfläche (16) für die Justierung einer Taktscheibe (10) auf der Motorwelle (2) ausgebildet ist,
und wobei die Taktscheibe (10) einen Führungsschaft (9) für die Motorwelle (2) mit einer Bohrung (3) aufweist,
**dadurch gekennzeichnet,**
**dass** in dem Gehäuseoberteil (11) eine quer zur Achse (6) der Taktscheibe verschiebbare Gabel (14) angeordnet ist, die in ihrer Ausgangstellung A vor dem Zusammenstecken den Führungsschaft (9) mit einer engen Zinkenöffnungsweite in einer in Bezug auf die Motorwellen-Achse zentrierten Position fixiert und in ihrer Entstellung B mit einer weiten Zinkenöffnung nach dem Einstecken der Motorwelle (2) in den Führungsschaft (9) und dem Verschieben der Gabel (14) den Führungsschaft und damit die Taktscheibe (10) freigibt, wobei der Führungsschaft (9) einen zur Flanschebene sich verjüngenden Außenkonus (19) aufweist, auf dem vor dem Zusammenstecken ein elastischer Ring (20) als Anschlag für die Gabel (14) in der Endstellung B angeordnet ist.

2. Encoder nach Anspruch 1,
**dadurch gekennzeichnet,**
**dass** am Austrittsende des Führungsschaftes (9) eine Fangbohrung (8) für das Einfangen der Motorwelle (2) angeordnet ist.

3. Encoder nach Anspruch 1 oder 2,
**dadurch gekennzeichnet,**
**dass** die Bajonettsegement (12a) eine im wesentlichen parallel zur Flanschebene verlaufende Kontaktfläche (13) und eine schräg zur Grundplatte (4) verlaufende Führungsfläche (5a) aufweisen und dass im Gehäuseoberteil (11) eine entsprechend geneigte Gegenfläche (5b) in den Aussparungen (12b) ausgebildet ist,
wobei die Gegenleitfläche (5b) gegenüber der Führungsfläche (5a) verlängert ist,
und **dass** bei einer Drehbewegung des Gehäuseoberteils (11) um die Taktscheibenachse (6) die Gegenfläche (5b) auf der Führungsfläche (5b) der Bagonettsegmente (12a) in Achsrichtung von der Grundplatte weg beweglich ist.

4. Encoder nach einem der vorhergehenden Ansprüche,
**dadurch gekennzeichnet,**
**dass** die Gabel (14) im Gehäuseoberteil (11) in Schlitzöffnungen (15), (17) geführt ist.

5. Encoder nach einem der vorhergehenden Ansprüche,
**dadurch gekennzeichnet,**
**dass** die Gabel (14) radiale Verlängerungen (14a), (14b) aufweist, die im Gehäuseoberteil (11) geführt sind,
**dass** die Gabel zwischen den Verlängerungen (14a), (14b) zu einer den Führungsschaft (9) halbkreisförmig umgreifenden Klammer (18) ausgebildet ist
und **dass** die Klammer (14) in Position A den Führungsschaft (9) konzentrisch zur Motorwelle 82) ausrichtet.

## Claims

1. An encoder having an interlocking housing which, at its end face, is flanged on to a motor (1) which, at least in one flange plane, comprises a motor shaft (2) projecting into the housing,
wherein the housing consists of a base plate (4) with an inner housing part (4a) and an upper housing part (11), which two parts (4a, 11), for assembly purposes, can be interlocked relative to one another and wherein bayonet segments (12a) are arranged on the inner housing part (4a), which bayonet segments (12a) engage matching recesses (12b) in the upper housing part,
wherein, furthermore, the bayonet segment (12a) is provided with guiding faces (5a) which, together with corresponding counter faces (5b) at the upper housing part, form sliding guiding means and which, when being inserted while being rotated in the circumferential direction, cause the upper housing part (11) to be separated from the base plate (4),
wherein, in a roof face of the upper housing part, there is formed a pressing-on face (16) for adjusting a timing disc (10) on the motor shaft (2), and
wherein the timing disc (10) comprises a guiding shank (9) for the motor shaft (2) with a bore (3),
**characterised in**
**that** in the upper housing part (11), there is arranged a fork (14) which, in its starting position A, prior to the interlocking operation, fixes the guiding shank (9) by means of a narrow prong opening width in a position which is centred relative to the motor shaft axis, and which fork (14), in its end position B, by means of a wide prong opening, after the motor shaft (2) has been interlocked with the guiding shank (9) and after the fork (14) has been displaced, releases the guiding shank and thus the timing disc (10),
wherein the guiding shank (9) comprises an outer cone (19) which is tapered towards the flange plane and on which, prior to the interlocking operation, a resilient ring (20) is arranged to serve as a stop for the fork (14) in its end position B.

2. An encoder according to claim 1,
**characterised in**
**that** at the exit end of the guiding shank (9) there is arranged a catching bore (8) for catching the motor shaft (2).

3. An encoder according to claim 1 or 2,
**characterised in**
**that** the bayonet segments (12a) comprise a contact face (13) which extends substantially parallel relative to the flange plane and a guiding face (5a) which extends at an angle relative to the base plate (4) and that in the upper housing part (11) there is formed a correspondingly inclined counter face (5b) in the recesses (12b),
wherein the counter face (5b) has a greater length relative to the guiding face (5a)
and **that**, if the upper housing part (11) carries out a rotational movement around the timing disc axis (6), the counter face (5b), on the guiding face (5a) of the bayonet segments (12a), can be axially moved away from the base plate.

4. An encoder according to any one of the preceding claims,
**characterised in**
**that** the fork (14) in the upper housing part (11) is guided in slotted apertures (15, 17).

5. An encoder according to any one of the preceding claims,
**characterised in**
**that** the fork (14) comprises radial extensions (14a, 14b) which are guided in the upper housing part (11),
**that** the fork, between the extensions (14a, 14b), forms a clamp (18) which embraces the guiding shank (9) in a semi-circular way, and
**that**, in position A, the clamp (18) aligns the guiding shank (9) so as to extend concentrically relative to the motor shaft (2).

## Revendications

1. Codeur avec un boîtier pouvant être assemblé par emboîtement pour le bridage frontal du codeur sur un moteur (1) qui présente au moins sur un plan de bridage un arbre de moteur (2) s'enfonçant dans le boîtier,
le boîtier étant constitué d'une plaque de base (4) présentant une partie intérieure de boîtier (4a) et d'une partie supérieure de boîtier (11), qui peuvent être emboîtées l'une dans l'autre pour l'assemblage,
et des segments à baïonnette (12a) étant disposés sur la partie intérieure de boîtier (4a), qui s'engagent dans des évidements correspondants (12b) de la partie supérieure de boîtier,
des surfaces de guidage (5a) étant en outre formées sur le segment à baïonnette (12a), qui forment un guidage par contact avec des contre-surfaces correspondantes (5b) sur la partie supérieure de boîtier et qui, lors de l'emboîtement, par rotation dans le sens circonférentiel, produisent une séparation de la partie supérieure de boîtier (11) de la plaque de base (4),
une surface de pression (16) pour l'ajustement d'un disque de synchronisation (10) sur l'arbre de moteur (2) étant formée dans une face de recouvrement de la partie supérieure de boîtier,
et le disque de synchronisation (10) présentant une tige de guidage (9) pour l'arbre de moteur (2), tige qui est pourvue d'un perçage (3),
**caractérisé en ce qu'**une fourche (14), mobile en translation transversalement à l'axe (6) du disque de synchronisation, est disposée dans la partie supérieure de boîtier (11), fourche qui, dans sa position initiale A, avant l'assemblage par emboîtement, avec une étroite largeur d'ouverture des fourchons, immobilise la tige de guidage (9) dans une position centrée par rapport à l'axe de l'arbre de moteur, et qui, dans sa position finale B, avec une grande ouverture des fourchons, après l'emboîtement de l'arbre de moteur (2) dans la tige de guidage (9) et la translation de la fourche (14), libère la tige de guidage et donc le disque de synchronisation (10), la tige de guidage (9) présentant un cône extérieur (19) se rétrécissant en direction du plan de bridage, cône sur lequel est disposé, avant l'assemblage par emboîtement, un anneau élastique (20) comme butée pour la fourche (14) dans la position finale B.

2. Codeur selon la revendication 1, **caractérisé en ce qu'**un perçage collecteur (8) est prévu à l'extrémité de la tige de guidage (9) pour recevoir l'arbre de moteur (2).

3. Codeur selon la revendication 1 ou 2, **caractérisé en ce que** les segments à baïonnette (12a) présentent une surface de contact (13) s'étendant sensiblement parallèlement au plan de bridage et une surface de guidage (5a) s'étendant en inclinaison par rapport à la plaque de base (4), et **en ce qu'**une contre-surface (5b) d'inclinaison correspondante est formée dans les évidements (12b) de la partie supérieure de boîtier (11),
la contre-surface directrice (5b) étant prolongée par rapport à la surface de guidage (5a),
et **en ce que**, lors d'un mouvement de rotation de la partie supérieure de boîtier (11) autour de l'axe (6) du disque de synchronisation, la contre-surface (5b) est axialement mobile sur la surface de guidage (5b) des segments à baïonnette (12a), en éloignement de la plaque de base.

4. Codeur selon l'une des revendications précédentes, **caractérisé en ce que** la fourche (14) est guidée dans des ouvertures (15), (17) en forme de fentes dans la partie supérieure de boîtier (11).

5. Codeur selon l'une des revendications précédentes, **caractérisé en ce que** la fourche (14) présente des prolongements radiaux (14a), (14b), qui sont guidés dans la partie supérieure de boîtier (11),
**en ce que** la fourche est réalisée, entre les prolongements (14a), (14b), en forme d'agrafe (18) entourant semi-circulairement la tige de guidage (9),
et **en ce que** l'agrafe (14), dans la position A, aligne la tige de guidage (9) concentriquement à l'arbre de moteur (2).
